# EUROPÄISCHE PATENTSCHRIFT

(11) **EP 1 944 112 B1**
(45) Veröffentlichungstag und Bekanntmachung des Hinweises auf die Patenterteilung: **17.10.2012**
(21) Anmeldenummer: 08006843.0
(22) Anmeldetag: 09.02.2007
(51) Int. Cl.: B23D 45/06, B23D 47/02

(54) **Tischkreissäge**
Circular saw bench
Scie circulaire à table

(30) Priorität: 31.03.2006 DE 202006005377 U; 29.05.2006 DE 202006008586 U
(43) Veröffentlichungstag der Anmeldung: 16.07.2008
(62) Teilanmeldung aus: 07002788.3
(73) Patentinhaber: Metabowerke GmbH, 72622 Nürtingen (DE)
(72) Erfinder: Imholt, Antonius, 49834 Wietmarschen-Lohne (DE); Jansen, Heinz, 49767 Twist (DE); Meelker, Thomas, 49767 Twist (DE); Moorkamp, Christian, 49688 Lastrup (DE); Niemann, Bernhard, 49740 Haselünne (DE); Raasch, Klaus, 49744 Geeste (DE); Wessels, Christian, 49744 Geeste (DE); Wittrock, Werner, 49733 Haren-Wesuwe (DE)
(74) Vertreter: Lorenz, Markus

(56) Entgegenhaltungen:
- EP-A- 0 715 934
- EP-A- 1 116 539
- DE-A1- 4 244 149
- US-A1- 2002 129 688

## Beschreibung

Die Erfindung betrifft eine Tischkreissäge mit einem an einem in Längsrichtung verschiebbaren Schlitten angeordneten Sägeaggregat, also eine Unterflurzugsäge, mit den Merkmalen des Oberbegriffs von Anspruch 1 bzw. von Anspruch 8.

Ein solche Tischkreissäge ist aus DE 4 244 149 A1 bekannt.

Tischkreissägen der in Rede stehenden Art, also Unterflurzugsägen, sind seit langem in vielen verschiedenen Ausführungsformen bekannt. Grundprinzip einer Unterflurzugsäge ist die Anordnung des Sägeaggregates in einem Schlitten, der unter der Tischplatte im Außengehäuse in Längsrichtung des Außengehäuses verschiebbar ist. Dadurch kann man das Kreissägeblatt im Längsschlitz von hinten nach vorne ziehen und dadurch das Werkstück beim Kappen auf der Tischplatte ortsfest liegen lassen. Dadurch wird eine besonders gute Schnittqualität erreicht. Die Unterflurzugsäge kann man aber auch wie eine normale Tischkreissäge betreiben, wenn man das Sägeaggregat etwa in die Mitte der Tischplatte zieht und dort arretiert. Um außerdem noch Gehrungsschnitte ausführen zu können, ist regelmäßig das Sägeaggregat auch bezüglich einer in Längsrichtung verlaufenden Gehrungsschnittachse jedenfalls nach einer Seite hin neigbar. Die Höhenverstellung und die Neigungsverstellung des Sägeaggregates befindet sich dabei häufig im Schlitten.

Bei der bekannten Unterflurzugsäge, von der die Erfindung ausgeht (EP-A-0 615 807) sind die Trag- und Führungsschienen an der Unterseite der Tischplatte fest angebracht, beispielsweise angeschraubt, so daß die Verschiebeführung des Sägeaggregates nur wenig tiefer als der Sägeschlitz in der Tischplatte liegt. Die Trag- und Führungsschienen können an der Tischplatte angeschraubt sein, sie können aber auch als Teil eines Extrusionsprofils aus Aluminium von vornherein mit einem Segment der Tischplatte einstückig ausgebildet sein. Eine segmentartige Ausführung der Tischplatte, wie sie bei dieser bekannten Tischkreissäge vorgesehen ist, schafft eine gute Zugänglichkeit des unter der Tischplatte befindlichen Bereiches auch von oben.

Bei der bekannten, zuvor erläuterten Unterflurzugsäge wird der Schlitten mittels eines daran angebrachten Zugstabes mit Zugknauf in Längsrichtung verschoben. Es gibt dabei gerade verlaufende Zugstäbe oder gekröpfte Zugstäbe, um beispielsweise die Handhabbarkeit seitlich der Seitenwange des Außengehäuses zu verbessern. Stets ist es so, daß der Schlitten mittels des Zugstabes gegen die Rückzugskraft einer den Schlitten in seine hintere Endstellung ziehenden Rückzugsfeder verschiebbar ist. Aus Sicherheitsgründen ist der Schlitten in seiner hinteren Endstellung gegenüber dem Außengehäuse arretierbar. Gleiches gilt in mindestens einer weiteren Verschiebestellung, nämlich der Kreissägestellung mit etwa in der Mitte der Tischplatte stehendem Kreissägeblatt.

Bei der bekannten Unterflurzugsäge ist die Konstruktion des Zugstabes mit seinen Verriegelungen relativ aufwendig. Dazu sind innerhalb des Zugstabes weitere in Längsrichtung verstellbare Betätigungselemente vorgesehen, die mit Riegelfedern und Riegelelementen am Zugstab und am Außengehäuse zusammenwirken. Es hat sich gezeigt, daß diese Konstruktion ebenfalls vergleichsweise kostenaufwendig, überdies reparaturanfällig ist.

Im übrigen sind generell für Tischkreissägen, insbesondere in Form von Unterflurzugsägen, außenseitig geschlossene oder außenseitig offene, also im unteren Bereich seitlich zugängliche Außengehäuse bekannt. Es ist ferner bekannt, die die Werkstückauflagefläche bildende Tischplatte mit integrierten, beispielsweise daran einstückig ausgeformten, oder mit angesetzten, insbesondere angeschraubten oder angeklemmten Führungsschienen für Längsanschläge, Queranschläge oder Winkelanschläge zu versehen (EP-A-0 615 807; DE-A-40 25 440). Schließlich ist es bekannt, das beispielsweise offene Außengehäuse der Unterflurzugsäge mit einem einklappbaren Untergestell mit integrierter Höhenverstellung zu versehen (Prospekt "UK 333" 0804 ELEKTRA BECKUM).

Der Lehre liegt das Problem zugrunde, die bekannte Unterflurzugsäge bei vorzüglicher Einstellpräzision konstruktiv zu vereinfachen.

Die zuvor aufgezeigte Problemstellung wird in einer ersten Alternative bei einer Unterflurzugsäge mit den Merkmalen des Oberbegriffs von Anspruch 1 durch die Merkmale des kennzeichnenden Teils von Anspruch 1 gelöst.

Die Vereinfachung in der Konstruktion unter Beibehaltung einer hohen Präzision wird durch die besonders geschickte Art und Weise der Arretierung des Zugstabes in seinen verschiedenen Stellungen erreicht.

Bevorzugte Ausgestaltungen der Lehre sind Gegenstand der weiteren Ansprüche 2 bis 7. Im optimalen Fall kann man das Arretierelement als plattenartiges Blechformteil ausführen, das unmittelbar an einem vorderen Wandstück des Außengehäuses verschwenkbar gelagert ist und mit Ringnuten am Zugstab in der einen oder anderen Weise in Eingriff kommt. Der Zugstab selbst braucht außer der Ausführung mit Kerben bzw. Ringnuten keine besondere Ausgestaltung zu erfahren.

Eine Variante, bei der die zuvor aufgezeigte Problemstellung gelöst ist, ist ebenfalls Gegenstand des Anspruchs 8. Anspruch 8 und die darauf rückbezogenen Ansprüche 9 bis 11 betreffen eine Arretierung des Zugstabes in der hinteren Endstellung des Schlittens, die toleranzunempfindlich ist.

Die hier beschriebene toleranzunempfindliche Variante der Blockierung des Schlittens in der hinteren Endstellung läßt sich mit den Merkmalen der vorherigen Variante verbinden, die mit der Arretierung des Zugstabes in der weiteren Verschiebestellung bzw. den weiteren Verschiebestellungen zusammenhängen.

Im folgenden wird die Erfindung in allen Aspekten anhand der Zeichnung näher erläutert. Dabei werden auch bevorzugte Ausführungsformen und besondere Vorteile einzelner Varianten der Erfindung eigenständig erläutert. Die Zeichnung zeigt ein besonders bevorzugtes Ausführungsbeispiel einer erfindungsgemäßen Tischkreissäge mit Unterflur-Zugfunktion. In der Zeichnung zeigt
- Fig. 1: eine perspektivische Ansicht einer erfindungsgemäßen Tischkreissäge mit Untergestell,
- Fig. 2: perspektivisch, in einer Draufsicht, die Tischplatte der Tischkreissäge, teilweise aufgeschnitten, um das darunter befindliche Sägeaggregat sehen zu können,
- Fig. 3: einen Querschnitt durch die Tischplatte mit dem darunter angeordneten Sägeaggregat,
- Fig. 4: eine Draufsicht auf die Oberseite des Schlittens mit den daran angeordneten, die Lagerelemente bildenden Lagerrollen,
- Fig. 5: eine Zugstange der erfindungsgemäßen Tischkreissäge,
- Fig. 6: in einer perspektivischen Ansicht ein Arretierelement eines bevorzugten Ausführungsbeispiels der erfindungsgemäßen Tischkreissäge,
- Fig. 7: in einer Ansicht von innen ein vorderes Wandstück des Außengehäuses mit dem Arretierelement in einer ersten Stellung,
- Fig. 8: einen Schnitt, ausschnittweise, am Wandstück gemäß Fig. 7,
- Fig. 9: eine Fig. 7 entsprechende Darstellung, das Arretierelement jedoch in der zweiten Stellung,
- Fig. 10: in einer Fig. 8 entsprechenden Darstellung einen Schnitt, ausschnittweise, mit dem Zugstab in einer der Kreissägestellung entsprechenden Verschiebestellung,
- Fig. 11: in einer ausschnittweisen, perspektivischen Darstellung eine Variante der Verriegelung des Zugstabes in der hinteren Endstellung des Schlittens.

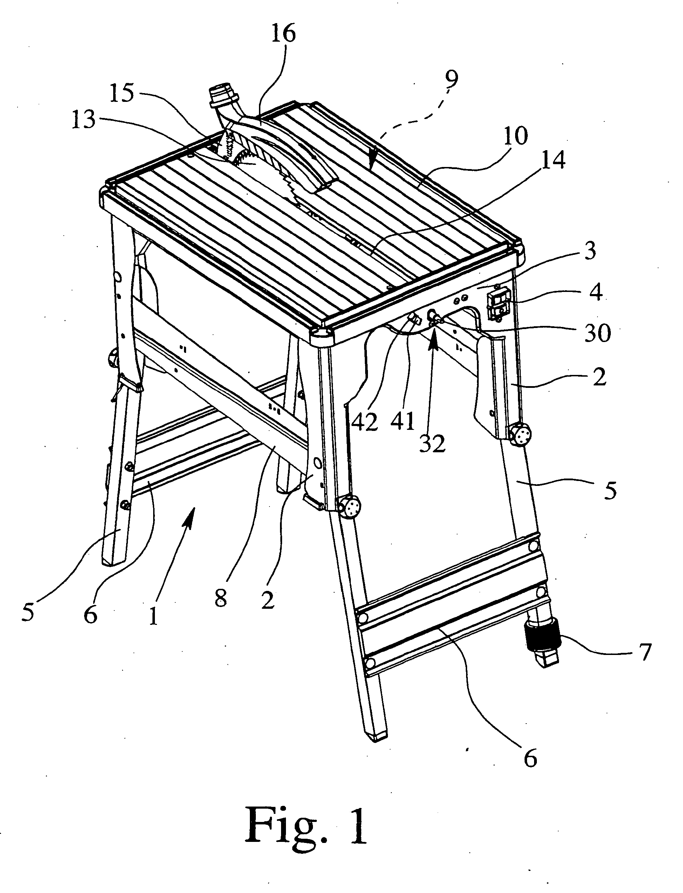

Die in Fig. 1 in perspektivischer Ansicht dargestellte Tischkreissäge weist zunächst ein Außengehäuse 1 auf, das im dargestellten Ausführungsbeispiel offen ist, im Stand der Technik aber auch häufig geschlossen vorkommt. Das Außengehäuse 1 hat vier Eckwinkel 2 und, soweit in Fig. 1 ersichtlich, ein die beiden vorderen Eckwinkel 2 verbindendes Wandstück 3, an dem man in Fig. 1 rechts eine Schalteranordnung 4 erkennt. Die vier Eckwinkel 2 werden von einem Untergestell getragen, das aus zwei jeweils zwei Beine 5 bildenden, einklappbaren Gestellhälften 6 besteht, wie das an sich aus dem Stand der Technik bekannt ist (siehe oben "UK 333"). Ein Bein 5 ist mit einer typischen Höhenverstellung 7 ausgerüstet. Zur Versteifung des insgesamt offenen Außengehäuses 1 sind die Eckwinkel 2 in Längsrichtung mit Versteifungsstreben 8 verbunden und versteift. Die Elemente des Außengehäuses 1 bestehen soweit wie bisher erläutert vorzugsweise aus abgekanteten Blechen. Es sind auch entsprechende Außengehäuse 1 bekannt, die auch in diesem Bereich verschiedene Elemente als Gußteile oder Extrusionsprofile aufweisen.

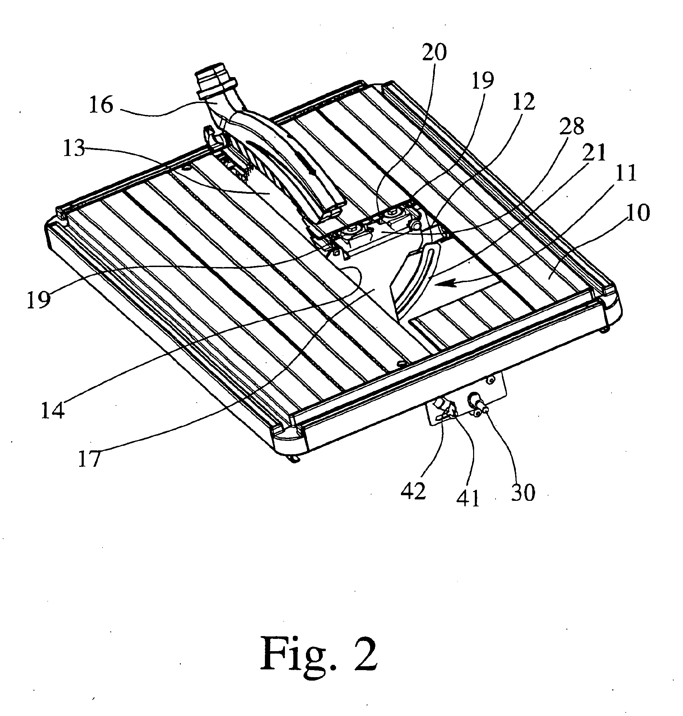

Besonders interessant ist nun die eine Werkstückauflagefläche 9 bildende, hier mehrteilige Tischplatte 10. Fig. 1 und Fig. 2 lassen im Zusammenhang erkennen, daß sich unter der Tischplatte 10 ein Sägeaggregat 11 mit einem Antriebsmotor 12 befindet. Vom Antriebsmotor 12 wird ein Kreissägeblatt 13 angetrieben, das die Tischplatte 10 von unten her in einem Sägeschlitz 14 durchsetzt. In Fig. 1 und 2 erkennt man die Ausrüstung des Sägeaggregates 11 mit einem höhenverstellbaren und auswechselbaren Spaltkeil 15 und einer daran angebrachten Späneabsaughaube 16, wie das sicherheitstechnisch vorgeschrieben ist.

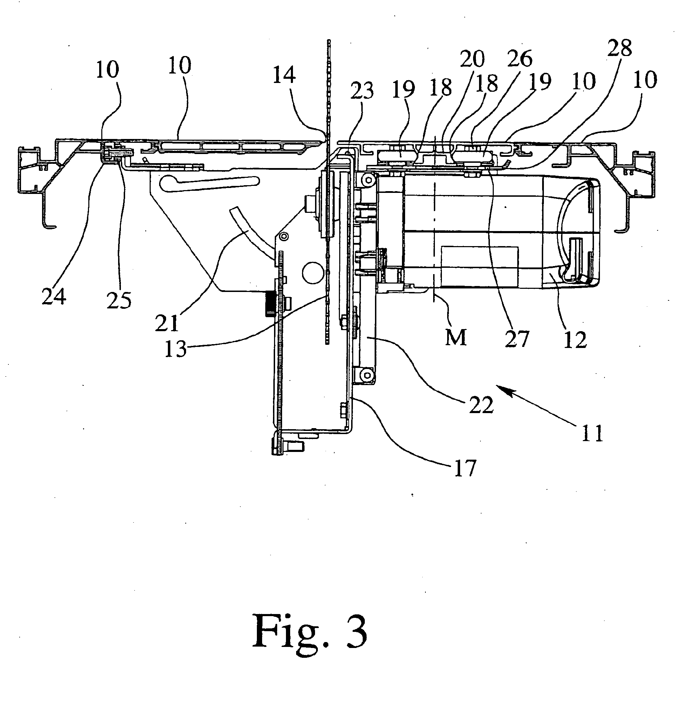

Der Sägeschlitz 14 erstreckt sich über einen erheblichen Teil, hier über die volle Länge der Tischplatte 10 und definiert damit die Längsrichtung der Tischkreissäge. Das Sägeaggregat 11 ist in Längsrichtung verschiebbar, wodurch sich das Kreissägeblatt 13 im Sägeschlitz 14 in Längsrichtung bewegt. Fig. 2 und 3 lassen im Zusammenhang erkennen, daß das Sägeaggregat 11 an oder in einem Schlitten 17 angeordnet ist. Der Schlitten 17 ist an zwei an der Unterseite der Tischplatte 10 fest angebrachten, in Längsrichtung parallel zueinander verlaufenden und in Querrichtung voneinander beabstandeten Trag- und Führungsschienen 18 mittels Lagerelementen 19 verschiebbar aufgehängt.

Wesentlich ist nun, daß die beiden Führungsschienen 18 rechts und links an einem einzigen Schienenprofil 20 ausgebildet und nur wenige Zentimeter voneinander beabstandet sind. Genau gesagt sind im dargestellten und insoweit bevorzugten Ausführungsbeispiel die Führungsschienen 18 am Schienenprofil 20 nur etwa 20 mm bis etwa 100 mm, hier und vorzugsweise etwa 30 mm, voneinander beabstandet.

Diese kompakte Anordnung der Führungsschienen 18 an einem Schienenprofil 20 hat zur Folge, daß die Toleranzen sich ausschließlich aus den Toleranzen bei der Herstellung des Schienenprofils 20 ergeben. Damit ist eine hochpräzise und gleichwohl sehr kostengünstig realisierbare Verschiebeführung für den Schlitten 17 vorgesehen.

Fig. 2 und 3 lassen noch kreisbogenförmige Führungsschienen 21 für die Seitenneigung des Sägeaggregats 11 zum Zwecke der Ausführung von Gehrungsschnitten erkennen. Außerdem zeigt Fig. 3 rechts am Antriebsmotor 12 im wesentlichen vertikal verlaufende Tragstangen 22, an denen der Antriebsmotor 12 höhenverstellbar angebracht ist. Somit kann durch Höhenverstellung des Antriebsmotors 12 in an sich bekannter Weise die Lage des Kreissägeblattes 13 in der Höhe relativ zur Werkstückauflagefläche 9 verstellt werden.

Schließlich erkennt man in Fig. 3 sehr nahe zur Werkstückauflagefläche 9 den Drehpunkt 23 für die seitliche Neigungsverstellung des Sägeaggregates 11, ebenfalls in an sich bekannter Weise.

Im dargestellten und bevorzugten Ausführungsbeispiel ist nun vorgesehen, daß das Schienenprofil 20 in Querrichtung der Tischkreissäge gesehen in einem Bereich zwischen der Mitte und etwa einem Viertel der Breite der Tischkreissäge angeordnet ist. Das dargestellte und bevorzugte Ausführungsbeispiel zeigt das Schienenprofil 20 bei etwa einem Drittel der Breite der Tischkreissäge. Die Lagerung mit dem Schienenprofil 20 ist also nahe an den Sägeschlitz 14 herangerückt.

Ferner ist vorgesehen, daß die Lagerelemente 19 am Schlitten 17 oberhalb des Antriebsmotors 12, vorzugsweise nahe dem Lagerschild des Antriebsmotors 12, angeordnet sind. Das alles führt dann insgesamt dazu, daß im dargestellten und bevorzugten Ausführungsbeispiel die vertikale Mittelebene M zwischen den den beiden Führungsschienen 18 zugeordneten Lagerelementen 19 am Schlitten 17 bei vertikal ausgerichtetem Kreissägeblatt 13 durch den oder nahe dem Schwerpunkt der von Sägeaggregat 11 und Schlitten 17 gebildeten Einheit verläuft. Man kann anhand von Fig. 3 ungefähr absehen, wo der Schwerpunkt der Einheit liegt, es wird etwas links von der Mittelebene M in der Darstellung von Fig. 3 sein. Wesentlich ist, daß dadurch beim Verfahren des Sägeaggregates 11 in der Zugfunktion die auf das Schienenprofil 20 wirkenden Kippmomente möglichst gering sind.

Im dargestellten und insoweit auch bevorzugten Ausführungsbeispiel werden die Kippmomente im übrigen noch weiter abgefangen. Dazu ist vorgesehen, daß an der Unterseite der Tischplatte 10, in Querrichtung von dem Schienenprofil 20 weit beabstandet, insbesondere nahe dem auf der gegenüberliegenden Seite des Sägeschlitzes 14 befindlichen Längsrand der Tischplatte 10, eine Abstützschiene 24 fest angebracht ist und am Schlitten 17 in Querrichtung von den Lagerelementen 19 entsprechend weit beabstandet mindestens ein weiteres Lagerelement 25 angeordnet ist, das auf, an oder in der Abstützschiene 24 laufend am Schlitten 17 angreifende Kippmomente an der Abstützschiene 24 abfängt. Hier läuft eine entsprechende Lagerrolle als Lagerelement 25 auf der einstückig am entsprechenden Segment der Tischplatte 10 ausgeformten Abstützschiene 24.

Das dargestellte und bevorzugte Ausführungsbeispiel realisiert, wie bereits im Stand der Technik für andere Schienen verwirklicht, daß das Schienenprofil 20 an der Tischplatte 10, genauer gesagt an einem Segment der Tischplatte 10 integral ausgeformt ist. Dazu ist vorgesehen, daß die Tischplatte 10 bzw. hier das Segment der Tischplatte 10 als Extrusionsprofil aus Leichtmetall, hier und bevorzugt aus Aluminium, ausgeführt ist. Das Schienenprofil 20 ist, in Fig. 3 gut erkennbar, Teil des Extrusionsprofils. Das ist fertigungstechnisch sehr zweckmäßig, führt zu optimalen Toleranzen und ist auch sehr kostengünstig.

Bislang ist über die genaue Konstruktion des Schienenprofils 20 noch nichts weiter gesagt worden. Aber auch das ist hier eine ganz besonders zweckmäßige Lösung. Vorgesehen ist nämlich, daß im dargestellten Ausführungsbeispiel die Führungsschienen 18 von nach rechts bzw. nach links offenen, keilförmigen oder bogenförmigen Nuten am Schienenprofil 20 gebildet sind und daß die Lagerelemente 19 als Lagerrollen, vorzugsweise als direkt kunststoffummantelte Kugellager, ausgeführt sind.

Im dargestellten und insoweit bevorzugten Ausführungsbeispiel sind die Lagerrollen 19 am Umfang mit einer zur Kontur der Führungsschienen 18 passenden Kontur ausgeführt. Ferner ist vorgesehen, daß die Lagerrollen 19 am Schlitten 17 auf im wesentlichen senkrecht zur Tischplatte 10 ausgerichteten Lagerachsen 26 drehbar gelagert sind. Dadurch kommt man zu einer sehr flach bauenden Rollenlagerung am Schienenprofil 20.

Im bevorzugten Ausführungsbeispiel ist vorgesehen, daß die Lagerrollen 19 einen Außendurchmesser von etwa 20 bis 40 mm, vorzugsweise von etwa 30 mm, und/oder eine Dicke von etwa 5 bis 12 mm, vorzugsweise von etwa 8 bis 9 mm, aufweisen.

Fig. 3 läßt erkennen, daß im dargestellten und bevorzugten Ausführungsbeispiel jeweils zwei den beiden Führungsschienen 18 zugeordnete Lagerrollen 19 einander gegenüberstehend angeordnet sind und eine der beiden Lagerrollen 19 in Querrichtung an das Schienenprofil 20 anstellbar und angestellt fixierbar ist. In Fig. 3 erkennt man bei der rechts dargestellten Lagerrolle 19 unten ein Langloch 27, in dem die Lagerachse 26 dieser Lagerrolle 19 seitlich verschoben werden kann. In der in Fig. 3 dargestellten Endstellung wird die Lagerachse 26 an der Plattform 28 des Schlittens 17 verspannt und so gegenüber dem Schienenprofil 20 fixiert. Eine ähnliche Anstellung und Fixierung kann man beispielsweise auch mit einer Exzenteranordnung erreichen. Auch die Verwendung einer Zahnleiste wäre denkbar, allerdings ist eine stufenlose Anstellung hinsichtlich der Toleranzen natürlich zweckmäßiger.

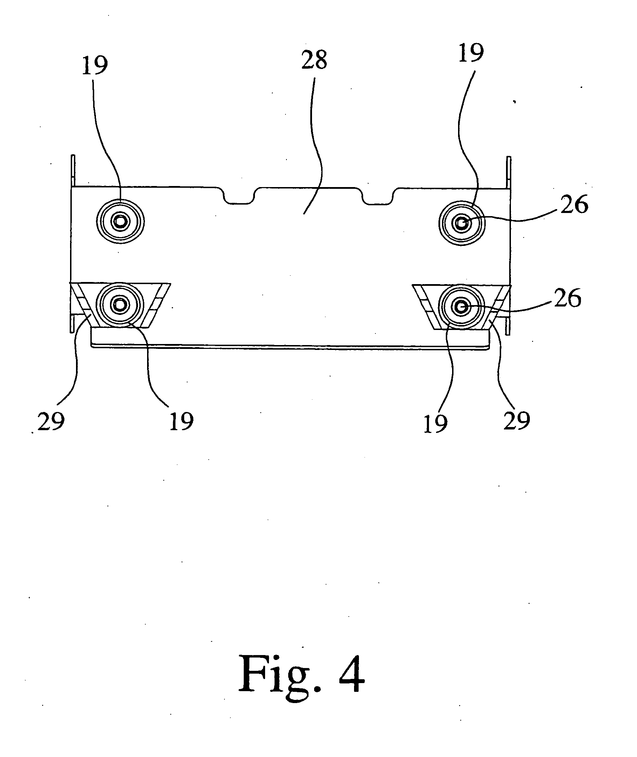

Fig. 4 macht deutlich, daß im dargestellten und bevorzugten Ausführungsbeispiel vorgesehen ist, daß je Führungsschiene 18 zwei in Längsrichtung mit erheblichem Abstand voneinander angeordnete Lagerelemente 19 vorgesehen sind. Insbesondere ist vorgesehen, daß die Lagerelemente 19 in einem Abstand von etwa 180 bis 280 mm, vorzugsweise von etwa 225 mm, angeordnet sind. Diese Maße gelten für typische Abmessungen einer solchen Tischkreissäge, beispielsweise mit einer Breite der Tischplatte von etwa 500 mm und einer Zuglänge des Kreissägeblattes 13 von etwa 300 mm bei einem Durchmesser des Kreissägeblattes 13 von etwa 200 bis 250 mm.

Wie bereits oben angesprochen bietet die vorliegende Lehre der Erfindung die Möglichkeit, eine sehr flach bauende Lagerung am Schienenprofil 20 zu verwirklichen. Dadurch hängt das Sägeaggregat 11 sehr dicht unter der Tischplatte 10, was vorteilhaft ist. Das dargestellte und bevorzugte Ausfi,ihrungsbeispiel macht es möglich, daß die Einbauhöhe der Lagerung, also der lichte Abstand zwischen der Unterseite der Tischplatte 10 und der Oberseite des Schlittens 17 im Bereich der Lagerelemente 19, etwa 12 bis 25 mm, vorzugsweise etwa 15 bis 18 mm, beträgt.

Fig. 4 läßt schließlich noch schematisch erkennen, daß den Lagerelementen 19 Schutz- und Abstreifelemente 29, vorzugsweise aus Kunststoffmaterial, zugeordnet sind. Diese dienen dazu, sich ansammelnden Schmutz von vorneherein nicht an die Lagerelemente 25 herankommen zu lassen, so daß eine langfristig wartungsfreie Lagerung des Schlittens 17 gewährleistet ist.

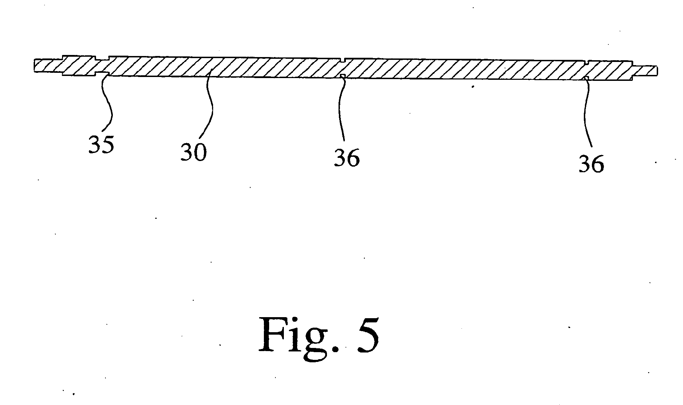

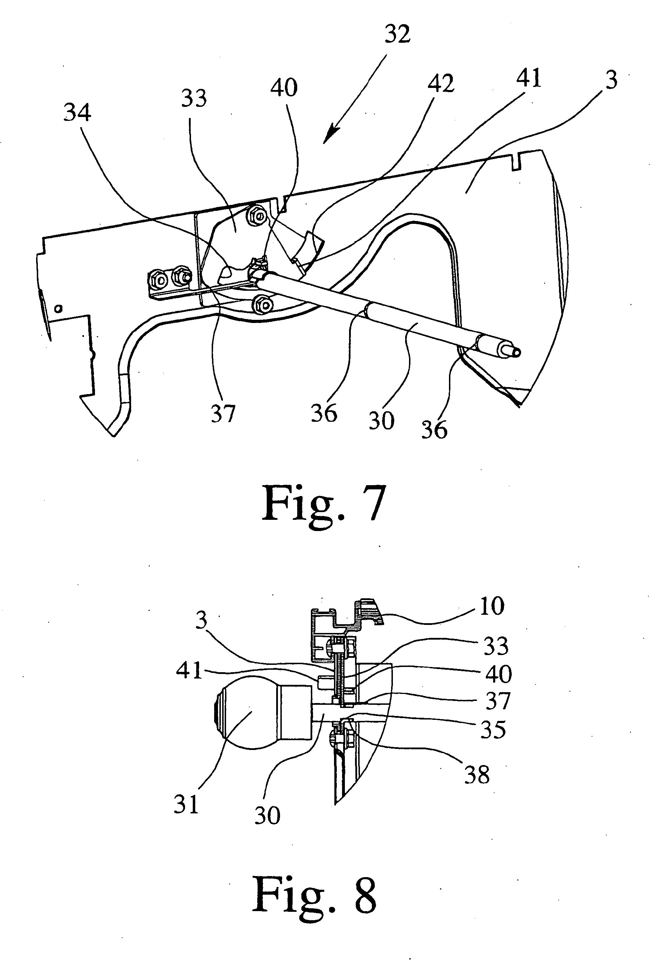

Bereits in Fig. 1 und Fig. 2 erkennt man am vorderen Wandstück 3 des Außengehäuses 1 die Spitze eines nach vorne herausragenden Zugstabes 30. Fig. 5 zeigt ein bevorzugtes Ausführungsbeispiel eines solchen Zugstabes 30 im Schnitt. Man sieht, daß es sich hier im dargestellten Ausführungsbeispiel um einen Vollstab handelt, der vorne ein Gewinde zum Aufschrauben eines Zugknaufs 31 (Fig. 8) und am anderen Ende ebenfalls ein Gewinde zum Einschrauben in eine Halterung am Schlitten 17 aufweist. Der Zugstab 30 dient dazu, den Schlitten 17 mitsamt dem Sägeaggregat 11 aus der in Fig. 1 und 2 dargestellten hinteren Endstellung nach vorne zu ziehen. Dadurch wird in einem auf der Werkstückauflagefläche 9 fixierten Werkstück ein Sägeschlitz erzeugt (Zugsägefunktion).

Wie bereits zu dem den Ausgangspunkt bildenden Stand der Technik erläutert worden ist, ist bei einer Unterflurzugsäge der Schlitten 17 mittels des daran angebrachten Zugstabes 30 gegen die Rückzugskraft einer den Schlitten 17 in seine hintere Endstellung ziehenden Rückzugsfeder verschiebbar. In seiner hinteren Endstellung ist der Schlitten 17 gegenüber dem Außengehäuse 1 fixierbar. Diese Fixierung kann durch Handbetätigung überwunden werden. Eine entsprechende Fixierung ergibt sich auch in einer weiteren Verschiebestellung, insbesondere in der Mittelstellung, bei der das Kreissägeblatt 13 etwa in der Mitte der Werkstückauflagefläche 9 wie bei einer normalen Tischkreissäge feststeht.

Das dargestellte und in den Fig. 1, 5-10 im einzelnen dargestellte Ausführungsbeispiel zeigt nun, daß am vorderen Rand unterhalb der Tischplatte 10 am Außengehäuse 1 eine Arretiervorrichtung 32 für den Zugstab 30 angeordnet ist, die ein am Außengehäuse 1 in Längsrichtung unbeweglich, in Querrichtung beweglich angeordnetes Arretierelement 33 aufweist, welches der Zugstab 30 in einer langlochartigen Kulisse 34 in allen Stellungen des Schlittens 17 in Längsrichtung durchsetzt. In einer ersten Stellung des Arretierelementes 33 erfolgt nur eine selbsttätige Arretierung des Zugstabes 30 in der hinteren Endstellung des Schlittens 17, die ohne Verlagerung des Arretierelementes 33 von Hand lösbar ist. In einer zweiten Stellung mit gegenüber der ersten Stellung in Querrichtung verlagertem Arretierelement 33 erfolgt eine von Hand eingelegte Arretierung des Zugstabes 30 zumindest in der weiteren Verschiebestellung, die nur durch Rückführung des Arretierelementes 33 in die erste Stellung von Hand wieder lösbar ist. Der Zugstab 30 hat an einer zur Endstellung des Schlittens 17 passenden Stelle eine mit der Kulisse 34 des in der ersten Stellung befindlichen Arretierelements 33 selbsttätig in Eingriff kommende Kontur 35 und an jeder zu einer weiteren Verschiebestellung des Schlittens 17 passenden Stelle eine mit der Kulisse 34 des in der zweiten Stellung befindlichen Arretierelements 33 in Eingriff kommende Kontur 36. In Fig. 5 am Zugstab 30 erkennt man links die breite Kontur 35, die der hinteren Endstellung des Schlittens 17 zugeordnet ist, in der Mitte die schmale Kontur 36, die der Mittelstellung des Schlittens 17 zugeordnet ist, und rechts nochmals eine schmale Kontur 36, die der ganz nach vorne gezogenen Stellung des Schlittens 17 zugeordnet ist. Die zweite Stellung kann hier im übrigen auch in der hinteren Endstellung eingenommen werden. Dann ist auch dort die Fixierung definitiv.

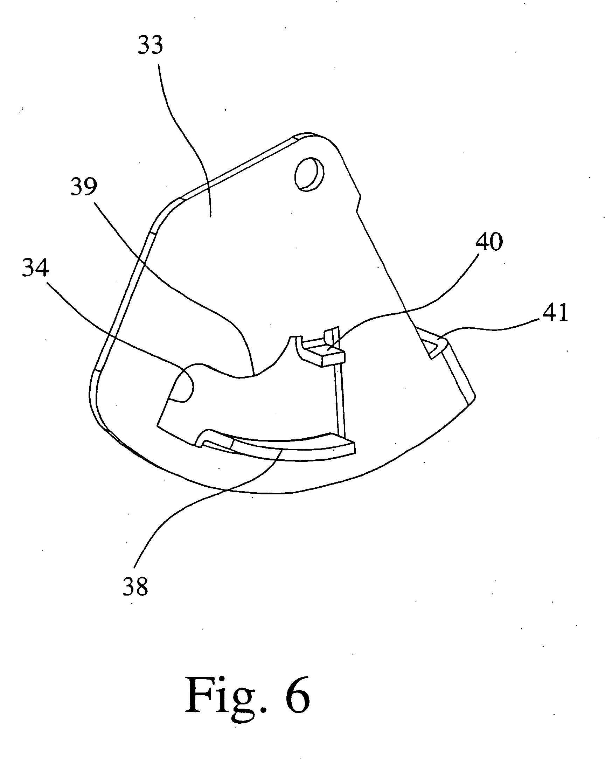

In Fig. 6 erkennt man ein bevorzugtes Ausführungsbeispiel eines erfindungsgemäß zu verwendenden Arretierelementes 33. Man erkennt die langlochartige Kulisse 34. Diese muß nicht vollständig geschlossen sein. Sie kann auch einseitig offen sein, evtl. auch an zwei verschiedenen Elementen der Arretiervorrichtung 32 ausgebildet bzw. von diesen Elementen zwischen sich gebildet sein. Wesentlich ist, daß die Kulisse 34 zwei Bereiche hat, nämlich den in Fig. 6 rechts liegenden Bereich der Kulisse 34, in dem sich bei in der ersten Stellung befindlichem Arretierelement 33 der Zugstab 30 befindet, und den in Fig. 6 links liegenden Bereich der Kulisse 34, in dem sich der Zugstab 30 bei in der zweiten Stellung befindlichem Arretierelement 33 befindet.

Das dargestellte und bevorzugte Ausführungsbeispiel zeigt dabei, daß in dem Bereich der Kulisse 34, in dem sich bei in der ersten Stellung befindlichem Arretierelement 33 der Zugstab 30 befindet, die lichte Breite der Kulisse 34 größer ist als der Außendurchmesser des Zugstabes 30, und in dem Bereich der Kulisse 34, in dem sich bei in der zweiten Stellung befindlichem Arretierelement 33 der Zugstab 30 befindet, die lichte Breite der Kulisse 34 geringer ist als der Außendurchmesser des Zugstabes 30.

Die Fig. 7 und 8 zeigen die Lage des Zugstabs 30 und des Arretierelements 33 in der hinteren Endstellung des Schlittens 17. Man erkennt, daß der untere Rand der Kulisse 34 in die breite Kontur 35 am Zugstab 30 von unten her blockierend/arretierend eingreift (Fig. 8). Das wird dadurch erreicht, daß im hier dargestellten Ausführungsbeispiel der Zugstab 30 durch Federkraft in Querrichtung an diesen Rand der Kulisse 34 angedrückt wird. Das dargestellte Ausführungsbeispiel zeigt dabei, daß hier die Federkraft durch eine nahe der Kulisse 34 am Zugstab 30 angreifende, insbesondere als Blattfeder ausgeführte Feder 37 erzeugt wird. Entgegen dieser den Zugstab 30 hier nach unten drückenden Federkraft der Feder 37 kann der Zugstab 30 von Hand angehoben werden. Die Kontur 35 kommt dabei außer Eingriff mit dem unteren Rand der Kulisse 34 und der Zugstab 30 kann, am Zugknauf 31 anpackend, nach vorne herausgezogen werden. Der Schlitten 17 mit dem Sägeaggregat 11 läuft ebenfalls nach vorne.

Eine Alternative für die Federvorspannung durch die Feder 37, die hier am Wandstück 3 in Fig. 7 links verankert ist, besteht darin, daß die Federkraft durch eine in sich federvorgespannte Lagerung und/oder Ausführung des Zugstabes 30 erzeugt wird. Man kann auf diese Weise entweder die Eigenelastizität des Zugstabs 30 selbst oder dessen Halterung am Schlitten 17 ausnutzen, um die gewünschte Rückverlagerung des Zugstabs 30 entgegen der Federkraft zu verwirklichen.

In beiden Fällen ist es jedenfalls so, daß der von der Rückzugsfeder in die hintere Endstellung zurückgezogene Schlitten 17 in der hinteren Stellung selbsttätig arretiert wird, weil nämlich der untere Rand der Kulisse 34 hier in die breite Kontur 35 eingreift.

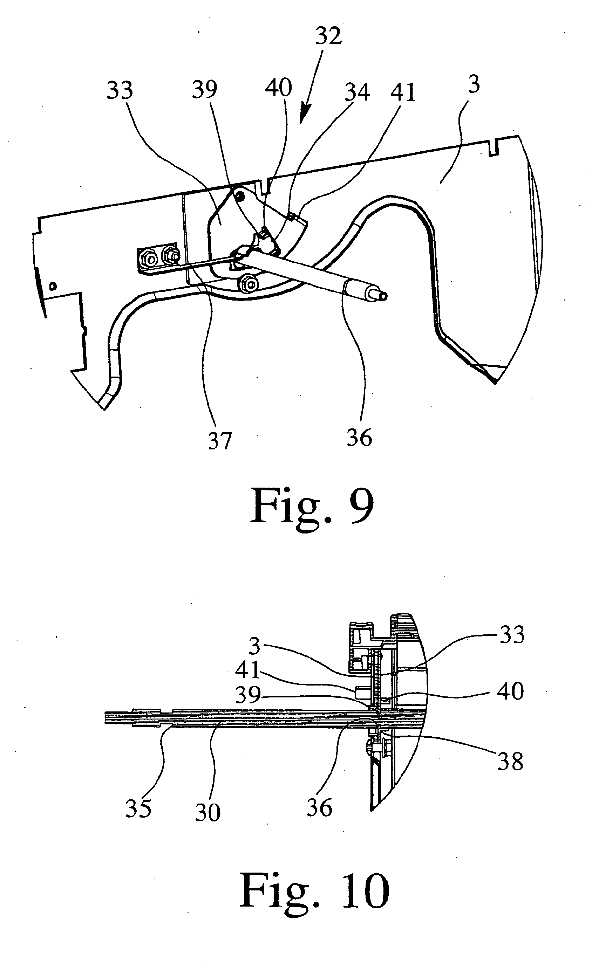

Demgegenüber zeigen die Fig. 9 und 10 eine von Hand durchgeführte und auch nur von Hand wieder lösbare Arretierung des Zugstabs 30 in der Mittelstellung dadurch, daß hier der obere Rand der Kulisse 34 von oben in die schmale Kontur 36 etwa in der Mitte des Zugstabs 30 formschlüssig eingreift. Das Kreissägeblatt 13 steht so formschlüssig fixiert etwa in der Mitte der Werkstückauflagefläche 9 wie bei einer normalen Tischkreissäge. Die Unterflurzugsäge kann in dieser Stellung des Kreissägeblattes 13 wie eine normale Tischkreissäge genutzt werden.

Fig. 9 zeigt, daß hier die Feder 37 keine Funktion hat, sondern die formschlüssige Verriegelung des Zugstabs 30 mittels des Arretierelementes 33 federunabhängig wirkt und auch nur von Hand durch Rückstellen des Arretierelementes 33 in die erste Stellung von Fig. 7 wieder lösbar ist.

Man könnte vorsehen, daß das Arretierelement 33 als Schieber ausgeführt und an einem Wandstück 3 des Außengehäuses 1 verschiebbar gelagert ist. Das dargestellte und bevorzugte Ausführungsbeispiel zeigt jedoch eine in der Praxis noch besser geeignete Lösung, die dadurch gekennzeichnet ist, daß das Arretierelement 33 als Schwenkelement ausgeführt und an einem Wandstück 3 des Außengehäuses 1 schwenkbar gelagert ist. In Fig. 6 erkennt man den Schwenkpunkt des Schwenkelements oben ebenso wie das in den Fig. 7 und 9 und im Schnitt der Fig. 8 und 10 zu erkennen ist. Bevorzugt ist das Arretierelement 33, insbesondere ausgeführt als Schwenkelement, als blattartiges Blechformteil ausgeführt. Das ist eine äußerst preisgünstige Lösung.

Die Fig. 6-10 zeigen im Zusammenhang noch weitere Details der hier dargestellten und insoweit bevorzugten konstruktiven Gestaltung der Tischkreissäge.

Hinsichtlich der Arretiervorrichtung 32 ist hier, besonders zweckmäßig bei einem als Blechformteil ausgeführten Arretierelement 33, eine Gestaltung vorgesehen, bei der die Kulisse 34 an einem Rand, im dargestellten Ausfiihrungsbeispiel am unteren Rand, einen in Längsrichtung dickeren Eingriffsrand 38 auf weist, der zu der breiten Kontur 35, nämlich der breiten Ringnut am vorderen Ende des Zugstabs 30 paßt. Am vorzugsweise gegenüberliegenden, hier dem oberen Rand hingegen weist die Kulisse 34 einen dünneren Eingriffsrand 39 auf.

Konkret hat dieser Eingriffsrand 39 hier nur gerade die Dicke des für das Arretierelement 33 verwendeten Bleches. (Beispielsweise ist hier eine Paarung 2,5 mm/2,3 mm vorgesehen.) Zum dickeren Eingriffsrand 38 paßt die breite Kontur 35, die hier in Form einer entsprechend breiten Ringnut am Zugstab 30 realisiert ist. (Beispielsweise ist hier eine Paarung 8,0 mm/7,8 mm vorgesehen).

Durch die Belastung der Feder 37 des Zugstabs 30 wird die breite Kontur 35 bei Erreichen des dickeren Eingriffsrandes 38 von selbst nach unten über den Eingriffsrand 38 formschlüssig eingreifend gedrückt. Der Zugstab 30 kann gegen die Kraft der Feder 37 wieder angehoben werden, so daß der Schlitten 17 dann wieder in Längsrichtung gezogen werden kann. Damit ist die selbsttätige Verriegelung des Schlittens 17 in der hinteren Endstellung gewährleistet.

Der dickere Eingriffsrand 38 kann aber in die schmaleren Konturen 36 am Zugstab 30 nicht eingreifen. Folglich gleitet der Zugstab 30 dort über den dickeren Eingriffsrand 38 hinweg. Die schmaleren Konturen 36 dienen aber der aktiven und manuellen Arretierung in zwei weiteren Verriegelungsstellungen, nämlich der Mittelstellung des Schlittens 17 und der vorderen Endstellung des Schlittens 17. Das erfolgt aber nicht selbsttätig, sondern von Hand absichtlich und dauerhaft dadurch, daß das Arretierelement 33 von der in Fig. 7 dargestellten ersten Stellung in die in Fig. 9 dargestellte zweite Stellung nach rechts geschwenkt wird. Dort greift der dünnere Eingriffsrand 39 in die schmale Kontur 36 am Zugstab 30 ein, der Zugstab 30 ist in dieser Stellung arretiert.

Damit in dem Bereich der Kulisse 34, in dem sich der Zugstab 30 bei in der ersten Stellung befindlichem Arretierelement 33 befindet, ein dünner Eingriffsrand beim Ziehen des Schlittens 17 mit angehobenem Zugstab 30 nicht unabsichtlich in die eine oder andere schmale Kontur 36 am Zugstab 30 eingreifen kann, ist hier eine Verbreiterung 40 vorgesehen, die deutlich breiter ist als die jeweilige schmale Kontur 36 am Zugstab 30 (beispielsweise 6,0 mm).

Es ist auch möglich, in dem Bereich der Kulisse 34, in dem sich der Zugstab 30 bei in der zweiten Stellung befindlichem Arretierelement 33 befindet, an beiden einander gegenüberliegenden Rändern der Kulisse 34 einen dünneren Eingriffsrand vorzusehen. Der dickere Eingriffsrand 38 würde sich in diesem Beispiel dann nur in dem Bereich der Kulisse 34, in dem sich der Zugstab 30 bei in der ersten Stellung befindlichem Arretierelement 33 befindet, erstrecken. Bei entsprechender Beabstandung der Ränder würde dann der Zugstab 30 mit der schmaleren Kontur 36 an der entsprechenden Stelle praktisch beidseitig eingeklemmt.

Der Vollständigkeit halber sei bemerkt, daß man statt vom dickeren und dünneren Eingriffsrand zu sprechen, in gleicher Bedeutung auch vom breiteren oder schmaleren Eingriffsrand sprechen könnte.

Im übrigen können die Zuordnungen von Nuten bzw. Kerben einerseits und Rändern bzw. Kanten andererseits in einzelnen Fällen auch umgekehrt getroffen werden.

Rechts am Arretierelement 33 findet man noch eine in Fig. 6 nach rückwärts und in Fig. 7 und 8 bezüglich des Wandstücks 3 nach außen gerichtete Lasche 41, die durch eine kreisbogenförmige Öffnung 42 im Wandstück 3 des Außengehäuses 1 nach außen ragt (Fig. 1), um von außen her manuell betätigt werden zu können.

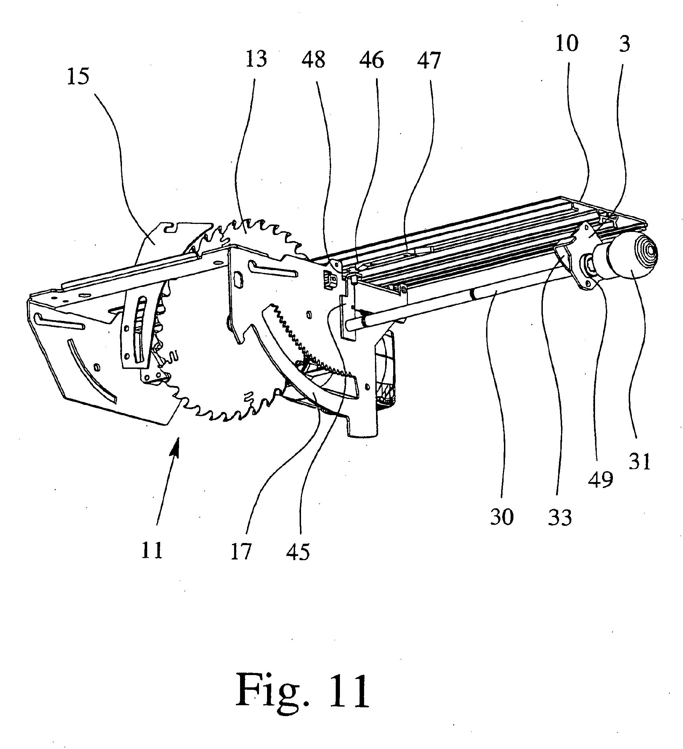

Fig. 11 läßt eine andere Variante für die Verriegelung (Blockierung) des Schlittens 17 in der hinteren Endstellung erkennen. Dabei ist vorgesehen, daß der Zugstab 30 an einer zur Endstellung des Schlittens 17 passenden Stelle eine Kontur 45 aufweist, die in der Endstellung des Schlittens 17 selbsttätig mit einem ortsfest am Außengehäuse 1, insbesondere an der Tischplatte 10, angeordneten Blockierelement 46 in Eingriff kommt (Blockierstellung). Der Zugstab 30 ist aus der Blockierstellung um seine Längsachse in einer Richtung, vorzugsweise entgegen dem Uhrzeigersinn, entgegen einer Rückstell-Federkraft in eine Freigabestellung drehbar, in der die Kontur 45 vom Blockierelement 46 frei ist und der Schlitten 17 in Längsrichtung nach vorne gezogen werden kann. Die Kontur 45 am Zugstab 30 kann auf ganz unterschiedliche Arten ausgestaltet sein, die dem Fachmann aus dem Stand der Technik ableitbar sind. Im vorliegenden Ausführungsbeispiel ist vorgesehen, daß die Kontur 45 als vom Zugstab 30 seitlich abragender Schwenkhebel ausgeführt ist. In Verbindung mit einem solchen Schwenkhebel läßt sich die Rückstellfeder beispielsweise als Schenkelfeder zwischen Schwenkhebel 45 und Schlitten 17 oder, wie hier, als Zugfeder realisieren.

Das dargestellte und bevorzugte Ausführungsbeispiel zeichnet sich ferner dadurch aus, daß das Bockierelement 46 an einem sich parallel zum Zugstab 30 erstreckenden Führungselement 47 ausgebildet ist und daß beim Ziehen des Schlittens 17 das Ende des Schwenkhebels 45 seitlich an dem Führungselement 47 gleitet. Um die an sich natürlich auch mögliche Gleitreibung durch eine leisere und problemlosere Rollreibung zu ersetzen, ist im dargestellten Ausführungsbeispiel ferner vorgesehen, daß der die Kontur 45 bildende Schwenkhebel an seinem Ende eine vorzugsweise kugelgelagerte Rolle 48 aufweist, die mit dem Blockierelement 46 in Eingriff kommt und seitlich an dem Führungselement 47 abrollt.

Bei dem in Fig. 11 darstellten Ausführungsbeispiel ist also die Blockierung des Schlittens 17 in der hinteren Endstellung nicht Aufgabe des Arretierelementes 33, sondern wird in der an sich bekannten Weise durch Drehung des Zugstabs 30 um seine Längsachse bewerkstelligt. Bei dieser Variante erfolgt die Arretierung des Zugstabes 30 mittels des Arretierelementes 33 nur in der weiteren Verschiebestellung oder den weiteren Verschiebestellungen des Schlittens 17. Dementsprechend sind in Verbindung mit der in Fig. 11 dargestellten Variante der Blokkierung in Endstellung nur die diesbezüglichen Merkmale betreffend das Arretierelement 33 und den Zugstab 30 anzuwenden.

Die hier beschriebene Variante hat den Vorteil, daß der Zugstab 30 am vorderen Wandstück 3 mittels einer geschlossenen Führung 49 gelagert werden kann, seine Führung beim Ziehen also insgesamt besonders gut ist.

## Patentansprüche

1. Tischkreissäge
mit einem offenen oder geschlossenen Außengehäuse (1) mit einer eine Werkstückauflagefläche (9) bildenden, einteiligen oder mehrteiligen Tischplatte (10), mit einem unter der Tischplatte (10) angeordneten Sägeaggregat (11) mit einem Antriebsmotor (12) und einem von diesem angetriebenen Kreissägeblatt (13), das die Tischplatte (10) von unten her in einem Sägeschlitz (14) durchsetzt,
wobei der Sägeschlitz (14) sich über einen erheblichen Teil der Länge der Tischplatte (10) erstreckt und damit die Längsrichtung der Tischkreissäge definiert, wobei das Sägeaggregat (11) in Längsrichtung verschiebbar ist, wodurch das Kreissägeblatt (13) sich im Sägeschlitz (14) in Längsrichtung bewegt,
wobei das Sägeaggregat (11) an oder in einem Schlitten (17) angeordnet ist und wobei der Schlitten (17) an Trag- und Führungsschienen (18) mittels Lagerelementen (19) verschiebbar aufgehängt ist,
wobei der Schlitten (17) mittels eines daran angebrachten Zugstabes (30) gegen die Rückzugskraft einer den Schlitten (17) in seine hintere Endstellung ziehenden Rückzugsfeder verschiebbar ist und wobei der Schlitten (17) in seiner hinteren Endstellung und in mindestens einer weiteren Verschiebestellung gegenüber dem Außengehäuse (1) arretierbar ist,
**dadurch gekennzeichnet,**
**daß** am vorderen Rand unterhalb der Tischplatte (10) am Außengehäuse (1) eine Arretiervorrichtung (32) für den Zugstab (30) angeordnet ist, die ein am Außengehäuse (1) in Längsrichtung unbeweglich, in Querrichtung beweglich angeordnetes Arretierelement (33) aufweist, welches der Zugstab (30) in einer langlochartigen Kulisse (34) in allen Stellungen des Schlittens (17) in Längsrichtung durchsetzt,
**daß** in einer ersten Stellung des Arretierelementes (33) nur eine selbsttätige Arretierung des Zugstabes (30) in der hinteren Endstellung des Schlittens (17) erfolgt, die ohne Verlagerung des Arretierelementes (33) von Hand lösbar ist,
**daß** in einer zweiten Stellung mit gegenüber der ersten Stellung in Querrichtung verlagertem Arretierelement (33) eine von Hand eingelegte Arretierung des Zugstabes (30) zumindest in der weiteren Verschiebestellung erfolgt, die nur durch Rückführung des Arretierelementes (33) in die erste Stellung von Hand wieder lösbar ist, und
**daß** der Zugstab (30) an einer zur Endstellung des Schlittens (17) passenden Stelle eine mit der Kulisse (34) des in der ersten Stellung befindlichen Arretierelements (33) selbsttätig in Eingriff kommende Kontur (35) und an jeder zu einer weiteren Verschiebestellung des Schlittens (17) passenden Stelle eine mit der Kulisse (34) des in der zweiten Stellung befindlichen Arretierelements (33) in Eingriff kommende Kontur (36) aufweist.

2. Tischkreissäge nach Anspruch 1, **dadurch gekennzeichnet,**
**daß** in dem Bereich der Kulisse (34), in dem sich bei in der ersten Stellung befindlichem Arretierelement (33) der Zugstab (30) befindet, die lichte Breite der Kulisse (34) größer ist als der Außendurchmesser des Zugstabes (30), und in dem Bereich der Kulisse (34), in dem sich bei in der zweiten Stellung befindlichem Arretierelement (33) der Zugstab (30) befindet, die lichte Breite der Kulisse (34) geringer ist als der Außendurchmesser des Zugstabes (30),
wobei vorzugsweise, der Zugstab (30) durch Federkraft in Querrichtung an einen Rand der Kulisse (34) angedrückt ist.

3. Tischkreissäge nach Anspruch 2, **dadurch gekennzeichnet,**
**daß** die Federkraft durch eine nahe der Kulisse (34) am Zugstab (30) angreifende, insbesondere als Blattfeder ausgeführte Feder (37) erzeugt wird, oder daß die Federkraft durch eine in sich federvorgespannte Lagerung und/oder Ausführung des Zugstabes (30) erzeugt wird,
wobei, vorzugsweise, der Zugstab (30) nach unten federbelastet und dagegen nach oben anhebbar ist und der obere bzw. der untere Rand der Kulisse (34) mit der entsprechenden Kontur (35; 36) am Zugstab (30) in Eingriff kommt.

4. Tischkreissäge nach einem der Ansprüche 1 bis 3, **dadurch gekennzeichnet,**
**daß** das Arretierelement (33) als Schieber ausgeführt und an einem Wandstück (3) des Außengehäuses (1) verschiebbar gelagert ist, oder daß das Arretierelement (33) als Schwenkelement ausgeführt und an einem Wandstück (3) des Außengehäuses (1) schwenkbar gelagert ist,
wobei, vorzugsweise, das Arretierelement (33) als blattartiges Blechformteil ausgeführt ist.

5. Tischkreissäge nach einem der Ansprüche 1 bis 4, **dadurch gekennzeichnet,**
**daß** die Kulisse (34) an einem Rand einen in Längsrichtung dickeren Eingriffsrand (38) und an einem anderen, vorzugsweise dem gegenüberliegenden Rand einen in Längsrichtung dünneren Eingriffsrand (39) aufweist.

6. Tischkreissäge nach Anspruch 5, **dadurch gekennzeichnet,**
**daß** der Zugstab (30) an der zur Endstellung des Schlittens (17) passenden Stelle als Kontur (35) eine breite Kerbe oder Ringnut aufweist, in die der dickere Eingriffsrand (38) eingreifen kann, und an jeder zu einer weiteren Verschiebestellung passenden Stelle als Kontur (36) eine schmale Kerbe oder Ringnut aufweist, in die der dünnere Eingriffsrand (39), aber nicht der dickere Eingriffsrand (38) eingreifen kann.

7. Tischkreissäge nach Anspruch 5 oder 6, **dadurch gekennzeichnet,**
**daß** in dem Bereich der Kulisse (34), in dem sich bei in der ersten Stellung befindlichem Arretierelement (33) der Zugstab (30) befindet, der dünnere Eingriffsrand (39) eine Verbreiterung aufweist und/oder
**daß** in dem Bereich der Kulisse (34), in dem sich bei in der zweiten Stellung befindlichem Arretierelement (33) der Zugstab (30) befindet, die Kulisse (34) auch an dem dem dünneren Eingriffsrand (39) gegenüberliegenden Rand einen dünneren Eingriffsrand aufweist.

8. Tischkreissäge
mit einem offenen oder geschlossenen Außengehäuse (1) mit einer eine Werkstückauflagefläche (9) bildenden, einteiligen oder mehrteiligen Tischplatte (10), mit einem unter der Tischplatte (10) angeordneten Sägeaggregat (11) mit einem Antriebsmotor (12) und einem von diesem angetriebenen Kreissägeblatt (13), das die Tischplatte (10) von unten her in einem Sägeschlitz (14) durchsetzt,
wobei der Sägeschlitz (14) sich über einen erheblichen Teil der Länge der Tischplatte (10) erstreckt und damit die Längsrichtung der Tischkreissäge definiert, wobei das Sägeaggregat (11) in Längsrichtung verschiebbar ist, wodurch das Kreissägeblatt (13) sich im Sägeschlitz (14) in Längsrichtung bewegt,
wobei das Sägeaggregat (11) an oder in einem Schlitten (17) angeordnet ist und wobei der Schlitten (17) an Trag- und Führungsschienen (18) mittels Lagerelementen (19) verschiebbar aufgehängt ist,
wobei der Schlitten (17) mittels eines daran angebrachten Zugstabes (30) gegen die Rückzugskraft einer den Schlitten (17) in seine hintere Endstellung ziehenden Rückzugsfeder verschiebbar ist und wobei der Schlitten (17) in seiner hinteren Endstellung gegenüber dem Außengehäuse (1) arretierbar ist,
**dadurch gekennzeichnet,**
**daß** der Zugstab (30) an einer zur Endstellung des Schlittens (17) passenden Stelle eine Kontur (45) aufweist, die in der Endstellung des Schlittens (17) selbsttätig mit einem ortsfest am Außengehäuse (1), insbesondere an der Tischplatte (10), angeordneten Blockierelement (46) in Eingriff zur Blockierstellung kommt und
**daß** der Zugstab (30) aus der Blockierstellung um seine Längsachse in einer Richtung, vorzugsweise entgegen dem Uhrzeigersinn, entgegen einer RückstellFederkraft in eine Freigabestellung drehbar ist, in der die Kontur (45) vom Blokkierelement (46) frei ist und der Schlitten (17) in Längsrichtung nach vorne gezogen werden kann.

9. Tischkreissäge nach Anspruch 8, **dadurch gekennzeichnet,**
**daß** die Kontur (45) als vom Zugstab (30) seitlich abragender Schwenkhebel ausgeführt ist,
wobei, vorzugsweise, das Blockierelement (46) an einem sich parallel zum Zugstab (30) erstreckenden Führungselement (47) ausgebildet ist und beim Ziehen des Schlittens (17) das Ende des Schwenkhebels (45) seitlich an dem Führungselement (47) gleitet,
wobei, ferner vorzugsweise, der die Kontur (45) bildende Schwenkhebel an seinem Ende eine vorzugsweise kugelgelagerte Rolle (48) aufweist, die mit dem Blockierelement (46) in Eingriff kommt und seitlich an dem Führungselement (47) abrollt.

10. Tischkreissäge nach Anspruch 8 oder 9, **dadurch gekennzeichnet,**
**daß** der Zugstab (30) am vorderen Wandstück (3) des Außengehäuses (1) mittels einer Führung (49) radial gelagert ist.

11. Tischkreissäge nach einem der Ansprüche 8 bis 10, **dadurch gekennzeichnet,**
**daß** am vorderen Rand unterhalb der Tischplatte (10) am Außengehäuse (1) eine Arretiervorrichtung (32) für den Zugstab (30) angeordnet ist, die ein am Außengehäuse (1) in Längsrichtung unbeweglich, in Querrichtung beweglich angeordnetes Arretierelement (33) aufweist, welches der Zugstab (30) in einer langlochartigen Kulisse (34) in allen Stellungen des Schlittens (17) in Längsrichtung durchsetzt,
**daß** in einer ersten Stellung das Arretierelement (33) hinsichtlich des Zugstabes (30) wirkungslos ist,
**daß** in einer zweiten Stellung mit gegenüber der ersten Stellung in Querrichtung verlagertem Arretierelement (33) eine von Hand eingelegte Arretierung des Zugstabes (30) zumindest in einer weiteren Verschiebestellung erfolgt, die nur durch Rückführung des Arretierelementes (33) in die erste Stellung von Hand wieder lösbar ist,
**daß** der Zugstab (30) an jeder zu einer weiteren Verschiebestellung des Schlittens (17) passenden Stelle eine mit der Kulisse (34) des in der zweiten Stellung befindlichen Arretierelements (33) in Eingriff kommende Kontur (36) aufweist.

12. Tischkreissäge nach Anspruch 11, **gekennzeichnet durch**
die Merkmale des kennzeichnenden Teils eines oder mehrerer der Ansprüche 2 bis 7.

## Claims

1. Circular-saw bench
having an open or closed outer casing (1) with a single-part or multi-part bench plate (10) which forms a workpiece support surface (9), and having a saw unit (11) which is arranged under the bench plate (10) and has a driving motor (12) and a circular-saw blade (13) which is driven by said motor and which passes through the bench plate (10) from below within a saw slot (14);
wherein the saw slot (14) extends over a considerable portion of the length of the bench plate (10) and thereby defines the longitudinal direction of the circular-saw bench;
wherein the saw unit (11) is displaceable in the longitudinal direction, as a result of which the circular-saw blade (13) moves in the longitudinal direction within the saw slot (14);
wherein the saw unit (11) is arranged on or in a carriage (17); and wherein said carriage (17) is suspended on carrying and guiding rails (18) in a displaceable manner by means of bearing elements (19);
wherein the carriage (17) is displaceable, by means of a tension bar (30) attached thereto, against the retracting force of a retracting spring that pulls the carriage (17) into its rear end position; and
wherein the carriage (17) can be locked in its rear end position and in at least one other position of displacement in relation to the outer casing (1);
**characterised in that**
there is arranged on the outer casing (1), at the front edge underneath the bench plate (10), a locking device (32) for the tension bar (30) that has a locking element (33) which is arranged on the outer casing (1) so as to be immovable in the longitudinal direction but movable in the transverse direction and which the tension bar (30) passes through in the longitudinal direction in a slot-like gate (34) in all the positions of the carriage (17);
that, in a first position of the locking element (33), there takes place only an automatic locking of the tension bar (30) in the rear end position of the carriage (17), which locking can be released by hand without relocation of the locking element (33);
that, in a second position with the locking element (33) relocated in the transverse direction in relation to the first position, there takes place a locking of the tension bar (30) which is engaged by hand, at least in the other position of displacement, and which can be released again only by guiding the locking element (33) back into the first position by hand; and that the tension bar (30) has, at a point that matches the end position of the carriage (17), a contour (35) that comes into engagement automatically with the gate (34) of the locking element (33), which element is located in the first position, and, at each point that matches another position of displacement of the carriage (17), a contour (36) that comes into engagement with the gate (34) of the locking element (33), which element is located in the second position.

2. Circular-saw bench according to claim 1, **characterised in that**, **in that** region of the gate (34) in which the tension bar (30) is located when the locking element (33) is located in the first position, the clear width of the gate (34) is greater than the external diameter of said tension bar (30) and, **in that** region of the gate (34) in which the tension bar (30) is located when the locking element (33) is located in the second position, the clear width of the gate (34) is smaller than the external diameter of said tension bar (30),
wherein the tension bar (30) is preferably pressed, by spring force in the transverse direction, against one edge of the gate (34).

3. Circular-saw bench according to claim 2, **characterised in that** the spring force is generated by a spring (37) which acts upon the tension bar (30) close to the gate (34) and is designed, in particular, as a leaf spring; or that the spring force is generated by a bearing arrangement and/or design of the tension bar (30) which is inherently spring-pretensioned;
wherein the tension bar (30) is preferably spring-loaded in the downward direction and can be lifted upwards against said spring-loading, and the upper or lower edge of the gate (34) comes into engagement with the corresponding contour (35; 36) on the tension bar (30).

4. Circular-saw bench according to one of claims 1 to 3, **characterised in that** the locking element (33) is designed as a slide and is mounted in a displaceable manner on a wall portion (3) of the outer casing (1), or that the locking element (33) is designed as a pivoting element and is mounted in a pivotable manner on a wall portion (3) of the outer casing (1),
wherein the locking element (33) is preferably designed as a leaf-like, shaped, sheet-metal part.

5. Circular-saw bench according to one of claims 1 to 4, **characterised in that** the gate (34) has, at one edge, an engagement edge (38) which is thicker in the longitudinal direction and, at another edge, preferably the opposite edge, an engagement edge (39) which is thinner in the longitudinal direction.

6. Circular-saw bench according to claim 5, **characterised in that** the tension bar (30) has, as a contour (35) at the point that matches the end position of the carriage (17), a wide notch or annular groove in which the thicker engagement edge (38) is able to engage, and has, as a contour (36) at each point that matches another position of displacement, a narrow notch or annular groove in which the thinner engagement edge (39), but not the thicker engagement edge (38), is able to engage.

7. Circular-saw bench according to claim 5 or 6, **characterised in that** the thinner engagement edge (39) has a widened portion **in that** region of the gate (34) in which the tension bar (30) is located when the locking element (33) is located in the first position; and/or
that the gate (34) also has a thinner engagement edge at the edge opposite the thinner engagement edge (39) **in that** region of the gate (34) in which the tension bar (30) is located when the locking element (33) is located in the second position.

8. Circular-saw bench
having an open or closed outer casing (1) with a single-part or multi-part bench plate (10) which forms a workpiece support surface (9), and having a saw unit (11) which is arranged under the bench plate (10) and has a driving motor (12) and a circular-saw blade (13) which is driven by said motor and which passes through the bench plate (10) from below within a saw slot (14);
wherein the saw slot (14) extends over a considerable portion of the length of the bench plate (10) and thereby defines the longitudinal direction of the circular-saw bench;
wherein the saw unit (11) is displaceable in the longitudinal direction, as a result of which the circular-saw blade (13) moves in the longitudinal direction within the saw slot (14);
wherein the saw unit (11) is arranged on or in a carriage (17); and wherein said carriage (17) is suspended on carrying and guiding rails (18) in a displaceable manner by means of bearing elements (19); wherein the carriage (17) is displaceable, by means of a tension bar (30) attached thereto, against the retracting force of a retracting spring that pulls the carriage (17) into its rear end position; and
wherein the carriage (17) can be locked in its rear end position in relation to the outer casing (1);
**characterised in that**
the tension bar (30) has, at a point that matches the end position of the carriage (17), a contour (45) that comes into engagement automatically for the blocking position, in the end position of the carriage (17), with a blocking element (46) which is arranged in a manner fixed in position on the outer casing (1), particularly on the bench plate (10); and
that the tension bar (30) can be rotated about its longitudinal axis out of the blocking position in one direction, preferably anticlockwise, against a restoring spring force and into a freeing position in which the contour (45) is clear of the blocking element (46) and the carriage (17) can be pulled forwards in the longitudinal direction.

9. Circular-saw bench according to claim 8, **characterised in that** the contour (45) is designed as a pivoting lever that projects laterally from the tension bar (30);
wherein the blocking element (46) is preferably constructed on a guide element (47) which extends parallel to the tension bar (30), and the end of the pivoting lever (45) slides laterally on the guide element (47) when the carriage (17) is pulled; and
wherein, also preferably, the pivoting lever that forms the contour (45) has, on its end, a roller (48) which preferably runs in ball bearings and which comes into engagement with the blocking element (46) and rolls laterally on the guide element (47).

10. Circular-saw bench according to claim 8 or 9, **characterised in that** the tension bar (30) is mounted radially on the front wall portion (3) of the outer casing (1) by means of a guide (49).

11. Circular-saw bench according to one of claims 8 to 10, **characterised in that** there is arranged on the outer casing (1), at the front edge underneath the bench plate (10), a locking device (32) for the tension bar (30) that has a locking element (33) which is arranged on the outer casing (1) so as to be immovable in the longitudinal direction but movable in the transverse direction and which the tension bar (30) passes through in the longitudinal direction in a slot-like gate (34) in all the positions of the carriage (17);
that, in a first position, the locking element (33) is inoperative with respect to the tension bar (30);
that, in a second position with the locking element (33) relocated in the transverse direction in relation to the first position, there takes place a locking of the tension bar (30), at least in another position of displacement, which is engaged by hand and which can be released again only by guiding the locking element (33) back into the first position by hand; and
that the tension bar (30) has, at each point that matches another position of displacement of the carriage (17), a contour (36) that comes into engagement with the gate (34) of the locking element (33), which element is located in the second position.

12. Circular-saw bench according to claim 11, **characterised by** the features of the characterising part of one or more of claims 2 to 7.

## Revendications

1. Scie circulaire à table,
comportant un bâti extérieur ouvert ou fermé (1) comportant une surface d'appui (9) d'une pièce à usiner formée par un plateau de table (10) en une pièce ou en plusieurs pièces, avec un ensemble de sciage (11) disposé en-dessous du plateau de table (10) pourvu d'un moteur d'entraînement (12) entraînant une lame de scie circulaire (13) qui traverse par le dessous une fente de sciage (14) ménagée dans le plateau de table (10),
dans laquelle la fente de sciage (14) s'étend sur une partie importante de la longueur du plateau de table (10) et définit de ce fait une direction longitudinale de la scie circulaire de table
dans laquelle l'ensemble de sciage (11) est coulissant selon la direction longitudinale de sorte que la lame de scie circulaire (13) se déplace longitudinalement dans la fente de sciage (14),
dans laquelle l'ensemble de sciage (11) est suspendu à ou monté sur un chariot (17) et dans laquelle le chariot (17) est porté par des rails de support et de guidage (18) au moyen d'éléments de roulement (19),
dans laquelle le chariot (17) est mobile en coulissement au moyen d'une tige de traction (30) couplée audit chariot, à l'encontre d'une force de rappel d'un ressort de rappel agissant sur le chariot (17) pour le ramener dans sa position extrême arrière, et dans laquelle le chariot (17) peut être arrêté dans sa position extrême arrière et dans au moins une autre position intermédiaire, par rapport au bâti extérieur (1),
**caractérisée en ce,**
**qu'**un dispositif d'arrêt (32) de la tige de traction (30) est disposé sur le bord frontal sous le plateau de table (10) et sur le bâti extérieur (1), ce dispositif comportant un élément d'arrêt (33) fixe longitudinalement par rapport au bâti extérieur (1) et mobile transversalement, cet arrêt étant agencé pour laisser traverser la tige de traction (30) dans une ouverture oblongue d'une coulisse (34) dans toutes les positions du chariot (17),
en ce que, dans une première position de l'élément d'arrêt (33), seul un verrouillage automatique de la tige de traction (30) correspondant à la position extrême arrière du chariot (17) est réalisé, ce verrouillage pouvant être débloqué manuellement sans déplacement de l'élément d'arrêt (33),
en ce que, dans une deuxième position, obtenue suite à un déplacement transversal de l'élément d'arrêt (33) par rapport à ladite première position, on obtient un verrouillage engagé manuellement de la tige de traction (30) au moins au cours du déplacement complémentaire, ce verrouillage ne pouvant être débloqué que par un retour manuel de l'élément d'arrêt (33), dans la première position et
en ce que la tige de traction (30) comporte, à l'un des emplacements correspondant à une position extrême du chariot (17) un fraisage (35) qui se met automatiquement en prise avec la coulisse (34) de l'élément d'arrêt (33) lorsqu'il se trouve dans la première position et, pour chaque emplacement correspondant à une position complémentaire du chariot (17) un fraisage (36) qui se met en prise avec la coulisse (34) de l'élément d'arrêt (33) lorsqu'il se trouve dans la deuxième position.

2. Scie circulaire à table selon la revendication 1, **caractérisée en ce que** dans la zone de la coulisse (34) dans laquelle se trouve la tige de traction (30) lorsque l'élément d'arrêt (33) se situe dans la première position, la largeur de l'ouverture de la coulisse (34) est supérieure au diamètre extérieur de la tige de traction (30), et dans la zone de la coulisse (34) dans laquelle se trouve la tige de traction (30) lorsque l'élément d'arrêt (33) se situe dans la deuxième position la largeur de l'ouverture de la coulisse (34) est inférieure au diamètre extérieur de la tige de traction (30),
de sorte que la tige de traction (30) est de préférence appuyée transversalement par une force de pression de ressort contre le bord de la coulisse (34).

3. Scie circulaire à table selon la revendication 2, **caractérisée en ce que** la force de ressort est générée par un ressort (37), en particulier un ressort sous forme de ressort plat, qui est en prise avec la tige de traction (30) à proximité de la coulisse (34), ou **en ce que** la force de ressort est générée par une disposition précontrainte et/ou une forme de réalisation de la tige de traction (30),
dans laquelle, la tige de traction (30) est de préférence sollicitée par ressort vers le bas et peut être soulevée vers le haut et le bord supérieur, respectivement le bord inférieur de la coulisse (34) entre en prise avec le fraisage correspondant (35, 36) ménagés sur la tige de traction (30).

4. Scie circulaire à table selon l'une des revendications 1 à 3, **caractérisée en ce que**,
l'élément d'arrêt (33) est configuré en coulisseau monté de manière à coulisser en appui contre une paroi (3) du bâti extérieur (1), ou **en ce que** l'élément d'arrêt (33) est configuré en élément pivotant monté de manière pivotante en appui contre une paroi (3) du bâti extérieur (1), dans laquelle, l'élément d'arrêt (33) est de préférence constitué d'une pièce en tôle usinée par formage.

5. Scie circulaire à table selon l'une des revendications 1 à 4, **caractérisée en ce que**,
la coulisse (34) comporte un rebord d'appui (38) plus épais, s'étendant longitudinalement le long d'un bord et un rebord d'appui (39) moins épais le long d'un autre bord, de préférence opposé au précédent bord.

6. Scie circulaire à table selon la revendication 5, **caractérisée en ce que**, la tige de traction (30) comporte à l'emplacement correspondant à la position extrême du chariot (17) une rainure ou gorge annulaire constituant la fraisure (35), dans laquelle le rebord d'appui plus large (38) peut s'engager, et à toute autre position correspondant à un autre emplacement approprié, une rainure ou gorge annulaire étroite constituant la fraisure (36), dans laquelle le rebord d'appui plus étroit (39) peut s'engager, mais pas le rebord d'appui plus large (38).

7. Scie circulaire selon l'une des revendications 5 ou 6, **caractérisée en ce que**,
dans la zone de la coulisse (34) dans laquelle se trouve la tige de traction (30) lorsque l'élément d'arrêt (33) se situe dans la première position, le rebord d'appui (39) plus étroit présente un élargissement et/ou
**en ce que**, dans la zone de la coulisse (34) dans laquelle se trouve la tige de traction (30) lorsque l'élément d'arrêt (33) se situe dans la deuxième position, la coulisse (34) comporte également un rebord d'appui plus étroit ménagé sur le bord opposé au rebord d'appui plus étroit (39).

8. Scie circulaire à table,
comportant un bâti extérieur ouvert ou fermé (1) comportant une surface d'appui (9) d'une pièce à usiner formée par un plateau de table (10) en une pièce ou en plusieurs pièces, avec un ensemble de sciage (11) disposé en-dessous du plateau de table (10) pourvu d'un moteur d'entraînement (12) entraînant une lame de scie circulaire (13) qui traverse par le dessous une fente de sciage (14) ménagée dans le plateau de table (10),
dans laquelle la fente de sciage (14) s'étend sur une partie importante de la longueur du plateau de table (10) et définit de ce fait une direction longitudinale de la scie circulaire de table
dans laquelle l'ensemble de sciage (11) est coulissant selon la direction longitudinale de sorte que la lame de scie circulaire (13) se déplace longitudinalement dans la fente de sciage (14),
dans laquelle l'ensemble de sciage (11) est suspendu à ou monté sur un chariot (17) et dans laquelle le chariot (17) est porté par des rails de support et de guidage (18) au moyen d'éléments de roulement (19),
dans laquelle le chariot (17) est mobile en coulissement au moyen d'une tige de traction (30) couplée audit chariot, à l'encontre d'une force de rappel d'un ressort de rappel agissant sur le chariot (17) pour le ramener dans sa position extrême arrière, et dans laquelle le chariot (17) peut être arrêté dans sa position extrême arrière et dans au moins une autre position intermédiaire, par rapport au bâti extérieur (1),
**caractérisée en ce que**
la tige de traction (30) comporte à l'un des emplacements correspondant à la position extrême du chariot (17) un fraisage (45) qui coopère automatiquement avec un élément de blocage (46) solidaire du bâti extérieur (1), en particulier du plateau de table (10) pour assurer un verrouillage, et
**en ce que** la tige de traction (30) peut être dégagée de sa position de verrouillage par rotation autour de son axe longitudinal, de préférence dans le sens opposé aux aiguilles d'une montre, à l'encontre d'une force de rappel de ressort, vers une position libre dans laquelle le fraisage (45) est libéré de l'élément de blocage (46) et le chariot (17) peut être tracté vers l'avant dans sa direction longitudinale.

9. Scie circulaire à table selon la revendication 8, **caractérisée en ce que**, le fraisage (45) est configuré en levier pivotant, localement en protubérance latéralement par rapport à la tige de traction (30),
dans laquelle, l'élément de blocage (46) est constitué d'un élément de guidage (47) s'étendant parallèlement à la tige de traction (30) et **en ce que**, lors de la traction du chariot (17) l'extrémité du levier pivotant (45) glisse latéralement le long de l'élément de guidage (47),
et **en ce que**, en outre, le levier pivotant constituant le fraisage (45), comporte un rouleau de préférence sphérique (48), qui entre en prise avec l'élément de blocage (46) et roule le long de l'élément de guidage (47).

10. Scie circulaire à table selon les revendications 8 ou 9, **caractérisée en ce que**,
la tige de traction (30) est montée sur roulement radial sur la paroi avant (3) du bâti extérieur (1) au moyen d'un guidage (49).

11. Scie circulaire à table selon l'une quelconque des revendications 8 à 10, **caractérisée en ce**
**qu'**elle comporte un dispositif d'arrêt (32) de la tige de traction (30), monté sous le bord avant du plateau de table (10), sur le bâti extérieur (1), comprenant un élément d'arrêt (33) fixe longitudinalement et mobile transversalement, solidaire du bâti extérieur (1), qui fait passer la tige de traction (30) dans une coulisse à ouverture oblongue (34) dans toutes les positions de déplacements longitudinaux du chariot (17),
en ce que, dans une première position, l'élément d'arrêt (33) est inopérant sur la tige de traction (30),
en ce que dans une deuxième position, un arrêt manuel de la tige de traction (30) est effectué au moins lors d'un déplacement complémentaire au moyen de l'élément d'arrêt (33) monté transversalement en opposition par rapport à la première position, cet arrêt ne pouvant être libéré que par le retour manuel de l'élément d'arrêt (33) dans la première position,
en ce que la tige de traction (30) présente, à chacune des positions correspondant aux déplacements coulissants complémentaires du chariot (17), un fraisage (36) en prise avec la coulisse (34) de l'élément d'arrêt (33) se trouvant dans la deuxième position.

12. Scie circulaire à table selon la revendication 11, **caractérisée par** les caractéristiques de la partie caractérisante d'une ou de plusieurs des revendications 2 à 7.
